# EUROPEAN PATENT SPECIFICATION

(11) **EP 4 402 388 B1**
(45) Date of publication and mention of the grant of the patent: **04.02.2026**
(21) Application number: 22870767.5
(22) Date of filing: 16.09.2022
(51) Int. Cl.: F16B 37/14, F16B 41/00

(54) **HIGH SECURITY FASTENER WITH DRIVE COUPLING KEY**
HOCHSICHERES BEFESTIGUNGSELEMENT MIT ANTRIEBSKUPPLUNGSSCHLÜSSEL
ÉLÉMENT DE FIXATION DE SÉCURITÉ ÉLEVÉE AVEC CLÉ DE COUPLAGE D'ENTRAÎNEMENT

(30) Priority: 16.09.2021 US 202163244892 P
(43) Date of publication of application: 24.07.2024
(73) Proprietor: McGard LLC, Orchard Park, NY 14127 (US)
(72) Inventor: KOBLICH, Brandon, A., Lancaster, NY 14086 (US); LONG, Timothy, J., Williamsville, NY 14221 (US)
(74) Representative: Mathisen & Macara LLP
(86) International application number: PCT/US2022/043847
(87) International publication number: WO 2023/044037

(56) References cited:
- GB-A- 1 274 286
- US-A1- 2019 113 069
- US-B1- 9 200 666
- US-B2- 10 962 044

## Description

### TECHNICAL FIELD

The present invention relates to high security fasteners, and more particularly to a high security fastener having a drive coupling key.

### BACKGROUND ART

Locking wheel nuts and wheel bolts are commonly used to attach wheels to axel hub assemblies of automobiles and other vehicles. These fasteners are designed with security features that are intended to thwart theft by rendering the fasteners difficult to remove with conventional tools. In particular, the fasteners do not have the usual hexagonal head pattern found on conventional nuts and bolts and instead have smooth cylindrical sidewalls that cannot be gripped by standard wrenches. Fastener removal requires the use of a special security tool or key having a unique key pattern that matches a corresponding groove pattern formed in the fastener end face.

Additional security can be obtained by fitting a free-spinning shroud or cap over the security fasteners cylindrical sidewalls, such that the shroud is in concentric relationship therewith. An example of such a device is disclosed in United Kingdom Patent number GB1274286, which discloses a nut or bolt with a threaded portion incorporating a keyway, the entryway to which is partially obstructed by a projection, with a sleeve fitted around the nut or bolt that is rotatable but not axially moveable. The shroud discourages the use of theft devices that could otherwise be used to grip the sidewalls and remove the fastener without an authorized security tool. Because the shroud substantially surrounds all exposed surfaces of the sidewalls, no rotational purchase can be obtained in the fastener. The theft device can only engage the shroud, which freely spins under action of the theft device while the main body of the fastener remains stationary.

### BRIEF SUMMARY

The present invention provides a fastener as defined in the appended claims. With parenthetical reference to corresponding parts, portions or surfaces of the disclosed embodiment, merely for the purposes of illustration and not by way of limitation, an improved fastener (15) is provided comprising a fastener body (16) orientated about a central axis; the fastener body having a key-engaging portion (17) to which a driving torque may be applied and a threaded fastening portion (18) configured and arranged to mate with a corresponding threaded element; the fastener body having a shroud-receiving body portion (19) orientated about the central axis; a shroud (20) concentrically mounted on the shroud-receiving body portion and having an inner surface (32) facing an outer surface (25) of the shroud-receiving body portion; the shroud being supported in rotatable relationship with the shroud-receiving body portion such that the shroud will rotate relative to the fastener body under an applied external torque prior to the fastener body rotating when the fastener is engaged with an external structure at a design installation torque; characterized by a torque coupler (50) operatively configured to rotationally engage the fastener body and the shroud; the torque coupler comprising a key portion (51) operatively configured to rotationally engage the key-engaging portion of the fastener body; the torque coupler comprising a shroud-engaging portion (68) operatively configured to rotationally engage a coupler-engaging portion (41) of the shroud; and the shroud having a tool-engaging portion (42) to which an external driving torque may be applied; wherein the coupler is operatively configured to be in rotatable relationship with both the key-engaging portion of the fastener body and the coupler-engaging portion of the shroud such that the fastener body will rotate about the central axis with rotation of the shroud about the central axis under an external driving torque applied about the central axis to the tool-engaging portion of the shroud at a design installation torque.

The fastener may comprise a shroud-retaining element (46) restraining the shroud from translational movement in at least a first axial direction along the central axis relative to the fastener body. The inner surface of the shroud may comprise an inwardly-facing annular groove (48), the outer surface of the shroud-receiving body portion may comprise an outwardly-facing annular groove (49), and the shroud-retaining element may comprise a retaining ring (46) disposed in the inwardly-facing annular groove and the outwardly-facing annular groove.

The coupler-engaging portion of the shroud may comprise a hexagonal outer surface (38). The shroud-engaging portion of the torque coupler may comprise a hexagonal inner surface (58). The tool-engaging portion of the shroud may comprise a hexagonal outer surface (38). The threaded fastening portion of the fastener body may comprise an internally threaded nut portion or an externally threaded bolt portion.

The shroud-receiving body portion of the fastener body may comprise an annular body shoulder having an annular body shoulder surface (24); the shroud may comprise an annular shroud end surface (30); and the annular body shoulder surface (24) and the annular shroud end surface (30) may be in an opposing orientation and may restrain the shroud from translational movement in an axial direction along the central axis relative to the fastener body. The torque coupler may comprise an annular coupler shoulder having an annular coupler shoulder surface (55); and the annular body shoulder surface (24) and the annular coupler shoulder surface (55) may be in an opposing orientation and may restrain the torque coupler from translational movement in the axial direction along the central axis relative to the fastener body.

The inner surface of the shroud may comprise an inwardly-facing annular groove (48); the outer surface of the shroud-receiving body portion may comprise an outwardly-facing annular groove (49); the shroud-retaining element may comprise a retaining ring (46) disposed in the inwardly-facing annular groove and the outwardly-facing annular groove restraining the shroud from translational movement in the first axial direction along the central axis relative to the fastener body; the shroud-receiving body portion of the fastener body may comprise an annular body shoulder having an annular body shoulder surface (24); the shroud may comprise an annular shroud end surface (30); the annular body shoulder surface and the annular shroud end surface may be in an opposing orientation and may restrain the shroud from translational movement in a second axial direction along the central axis relative to the fastener body; the torque coupler may comprise an annular coupler shoulder having an annular coupler shoulder surface (55); and the annular body shoulder surface (24) and the annular coupler shoulder surface (55) may be in an opposing orientation and may restrain the torque coupler from translational movement in the second axial direction along the central axis relative to the fastener body.

### BRIEF DESCRIPTION OF THE DRAWINGS

FIG. 1 is a perspective view of a first embodiment of an improved security fastener and drive coupling key.
FIG. 2 is an exploded view of the security fastener and coupling key shown in FIG. 1.
FIG. 3 is a longitudinal vertical sectional view of the security fastener and coupling key shown in FIG. 1.
FIG. 4 is a perspective view of the security fastener shown in FIG. 1.
FIG. 5 is an exploded view of the security fastener shown in FIG. 4.
FIG. 6 is a longitudinal vertical sectional view of the security fastener shown in FIG. 4.
FIG. 7 is an enlarged detailed view of the security fastener shown in FIG. 6, taken generally within the indicated circle A of FIG. 6.
FIG. 8 is a perspective view of the coupling key shown in FIG. 1.
FIG. 9 is a longitudinal vertical sectional view of the coupling key shown in FIG. 8.
FIG. 10 is a right side elevation of the coupling key shown in FIG. 9 .
FIG. 11 is a perspective view of the security fastener and coupling key shown in FIG. 1 in threaded engagement with a bolt, post, or stud to which the fastener is fastened and a drive tool for applying an installation torque to the fastener via the coupling key.

### DETAILED DESCRIPTION OF THE EMBODIMENTS

At the outset, it should be clearly understood that like reference numerals are intended to identify the same structural elements, portions or surfaces consistently throughout the several drawing figures, as such elements, portions or surfaces may be further described or explained by the entire written specification, of which this detailed description is an integral part. Unless otherwise indicated, the drawings are intended to be read (e.g., crosshatching, arrangement of parts, proportion, degree, etc.) together with the specification, and are to be considered a portion of the entire written description of this invention. As used in the following description, the terms "horizontal", "vertical", "left", "right", "up" and "down", as well as adjectival and adverbial derivatives thereof (e.g., "horizontally", "rightwardly", "upwardly", etc.), simply refer to the orientation of the illustrated structure as the particular drawing figure faces the reader. Similarly, the terms "inwardly" and "outwardly" generally refer to the orientation of a surface relative to its axis of elongation, or axis of rotation, as appropriate.

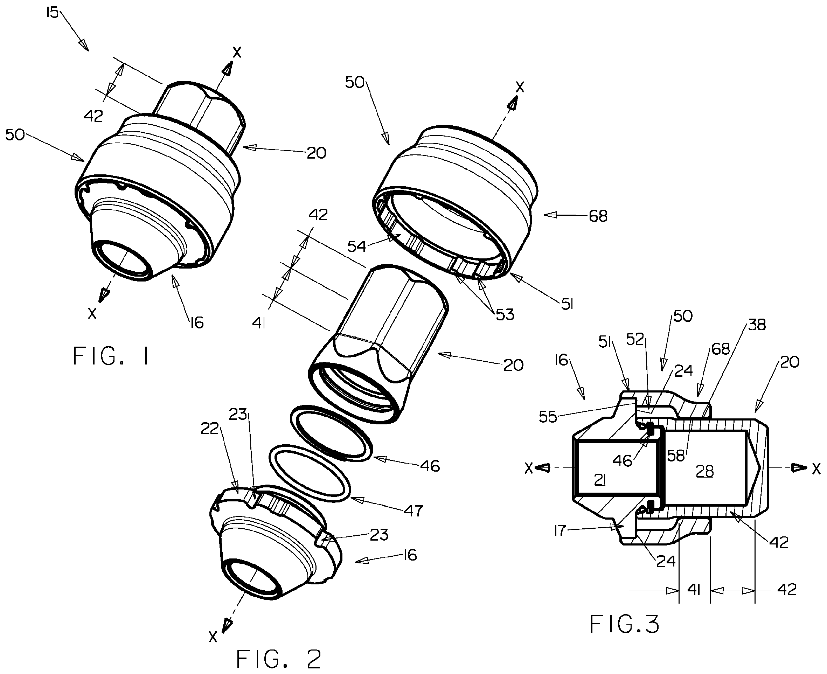

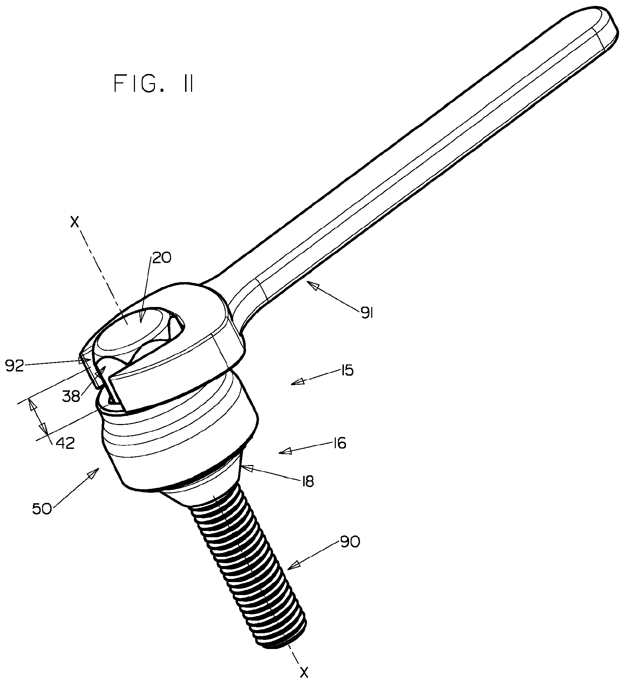

Referring now to FIGS. 1-11, an improved safety fastener with drive coupling key is provided, a first nut-type embodiment of which is generally indicated at 15. Fastener 15 generally includes fastener body 16, cap or shroud 20, which ordinarily rotates about axis x-x relative to fastener body 16, and coupler 50, which is configured to rotationally couple shroud 20 to fastener body 16 such that fastener body 16 rotates about axis x-x with rotation of shroud 20 about axis x-x.

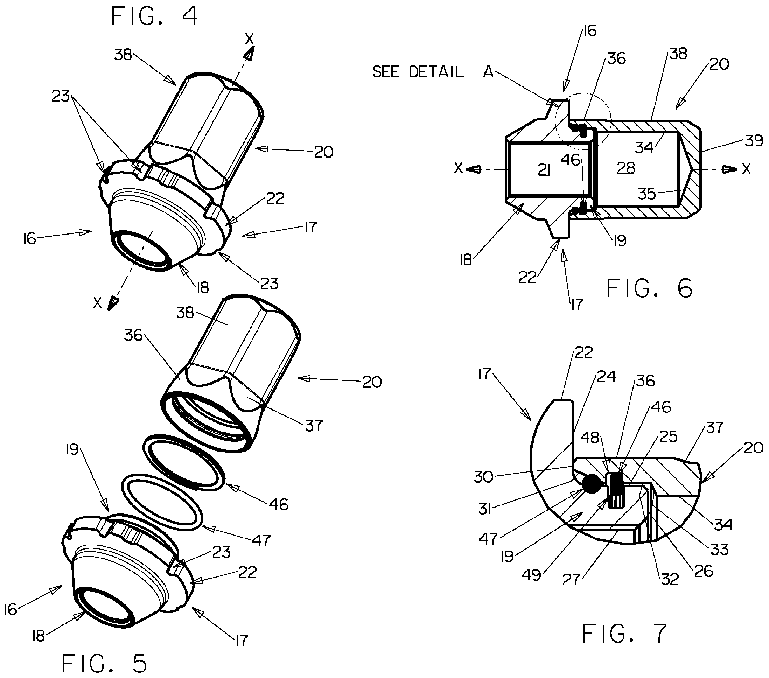

As shown in FIGS. 4-7, fastener body 16 includes key-receiving portion 17, threaded fastening portion 18 and shroud-retaining post 19 on which shroud 20 is rotationally supported.

Threaded fastening portion 18 of fastener body 16 includes bore 21 that is internally threaded over a portion or all of its length. Nut fastener 15 may be installed in a wheel having a recess hole formed as a relatively deep cylindrical well. The wheel hole has an annular recess entrance and a wheel stud or post 90 in the wheel hole, and fastener body 16 and fastening portion 18 are sized and installed such that the interior threads of inner bore 21 engage the corresponding exterior threads of the wheel stud 90 in the wheel hole.

Key-receiving portion 17 of fastener body 16 extends radially outward between fastening portion 18 and shroud-retaining post 19 and comprises side wall 22 that is substantially cylindrical in shape. Side wall 22 is formed with a key-receiving pattern that may be implemented as a set of circumferentially arranged lock pattern grooves 23. Lock pattern configurations that use formations of other grooves may also be used. As can be seen, lock pattern grooves 23 are visible on the annular right face 24 of key-receiving portion 17 that lies between side wall 22 and shroud 20. As further described herein, in order to impart lock pattern uniqueness, lock pattern grooves 23 may be patterned or configured in any suitable alternative manner, such as by employing a selected number of grooves and/or by varying other features thereof, such as the spacing between grooves and/or the width, length, depth, profile or other configuration or feature thereof.

As shown in FIGS. 6 and 7, retaining post 19 of fastener body 16 is a specially configured cylindrical member elongated along axis x-x and is generally bounded by rightwardly-facing vertical annular surface 24, outwardly-facing horizontal cylindrical surface 25, rightwardly-facing annular vertical surface 26, and inwardly-facing horizontal cylindrical surface 27.

Shroud 20 extends over and around shroud-retaining post 19. As shown, shroud 20 includes inner bore 28 and outer hex portion 38. Shroud 20 has a generally cylindrical configuration elongated along axis x-x and is generally bounded by leftwardly-facing inner end surface 35, inwardly-facing horizontal cylindrical surface 34, leftwardly and inwardly-facing frusto-conical surface 33, inwardly-facing horizontal cylindrical surface 32, leftwardly and inwardly-facing frusto-conical surface 31, leftwardly-facing vertical annular surface 30, outwardly-facing horizontal cylindrical surface 36, outwardly-facing tapered surface 37, outwardly-facing hexagonal surface 38, and rightwardly-facing outer end surface 39. Inner bore 28 is thereby defined by surfaces 35, 34, 33, 32 and 31. Hex portion 38 is configured to be received in corresponding hex socket, tool, or drive surface 92 of drive tool 91.

A shroud retainer is used to retain shroud 20 for rotation relative to fastener body 16 such that shroud 20 is retained axially along axis x-x relative to fastener body 16 but will ordinarily rotate about axis x-x relative to fastener body 16 under an applied torque prior to the fastener body 16 rotating when it is installed at a design installation torque. In this embodiment, the shroud retainer is provided in a first aspect or axial direction by way of shoulder surface 24 of retaining post 19 being sized to oppose all or a portion of annular end face 30 of shroud 20. In a second aspect or axial direction, the shroud retainer is provided by way of annular shroud retaining ring 46 disposed in and radially overlapping between opposed annular retainer grooves 48 and 49 formed in opposed inwardly-facing surface 32 of shroud 20 and outwardly-facing surface 25 of fastener body 16, respectively. Thus, to accommodate retaining ring 46, shroud-retaining post 19 is formed with annular groove 49 for supporting retaining ring 46 in an axially fixed position and shroud 20 is likewise formed with annular groove 48 for supporting retaining ring 46 in an axially fixed position. Thus, retaining ring 46 prevents shroud 20 from being pulled toward annular end 26 of fastener body 16. While retaining ring 48 is preferably formed as a split ring retainer, other retainer ring or clip designs may be used as alternatives. Furthermore, other shroud retainer designs may be used as alternatives.

If it is desired that shroud 20 not spin entirely freely on fastener body 16 but have some resistance to rotation so that its rotational position remains stable unless and until shroud 20 is intentionally rotated to adjust its position, the torque required to rotate shroud 20 relative to fastener body 16 may be controlled by providing a frictional interface between one or more opposing surfaces of shroud 20 and fastener body 16. The frictional interface prevents shroud 20 from free-spinning on fastener body 16 while allowing shroud 20 to be rotated by hand or by using a tool. In this embodiment, rubber O-ring 47 is installed at the interface between surface 31 of shroud 20 and the junction of surfaces 24 and 25 of shroud-retaining post 19 of fastener body 16.

When assembled, retainer ring 46 extends between grooves 48 and 49, thereby retaining shroud 20 on the end of body 16 such that shroud 20 is free to rotate about center axis x-x of body 16 but is restrained from moving axially to the left off of end 26 of post 19 and body 16. Shroud 20 is thereby mounted concentrically on retaining post 19 of fastener body 16 such that it does not move axially off of retaining post 19 but is substantially free to rotate about axis x-x relative to fastener body 16.

Although exterior surfaces 36 and 37 are shown as being substantially cylindrical and rounded and hexagonally tapered, respectively, other shapes or contours could also be used, such as all hexagonal, square, or entirely cylindrical. Although exterior surface 38 of shroud 20 is shown as having a hexagonal cross-section, other cross-sections, shapes, or contours could also be used, such as square or octagonal. Moreover, although shroud 20 is shown as being closed ended on one side, alternatively it may have an open-ended configuration that partially exposes the end of post 19. If desired, shroud 20 may have a decorative finish to improve fastener appearance, including, but not limited to, nickel/chrome plating, silver, or gray coatings. Shroud 20 is preferably made from metal so that annular retainer groove 49 will possess the requisite retention strength and rigidity that provides a high-strength, axially non-deformable interconnection that holds shroud 20 in a substantially fixed and immovable axial position relative to fastener body 16 and so that hexagonal portion 38 will possess the requisite torsional strength and rigidity to be driven to rotate about axis x-x at the design installation torque. Alternatively, shroud 20 may comprise a non-metallic material, such as rigid, high strength plastic, for example.

Coupler 50 is configured to rotationally engage and torsionally couple shroud 20 and fastener body 16 such that fastener body 16 rotates about axis x-x with rotation of shroud 20 about axis x-x at the design installation torque. Coupler 50 includes inner through-bore 52 and is configured to extend over and rotationally engage both key-receiving portion 17 of fastener body 16 and hex segment 41 of shroud 20. As shown in FIGS. 1-3, coupler 50 includes key portion 51 configured to engage key-receiving portion 17 of fastener body 16 and hex-receiving portion 68 configured to engage first axial segment 41 of hex portion 38 of shroud 20.

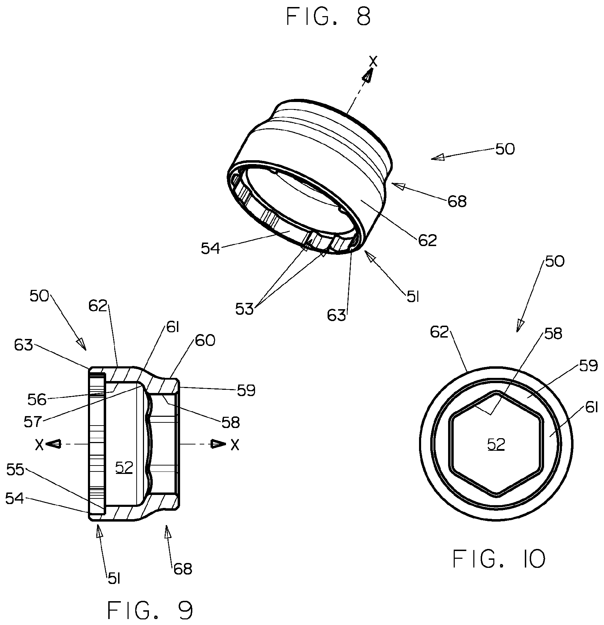

As shown in FIG. 9, coupler 50 has a generally solid unitary cylindrical configuration elongated along axis x-x and is generally bounded by rightwardly-facing vertical annular surface 59, outwardly-facing horizontal cylindrical surface 60, rightwardly and outwardly-facing frusto-conical surface 61, outwardly-facing horizontal cylindrical surface 62, leftwardly-facing vertical annular surface 63, inwardly-facing horizontal cylindrical key pattern surface 54, leftwardly-facing vertical annular surface 55, inwardly-facing horizontal cylindrical surface 56, inwardly-facing tapered surface 57, and inwardly-facing hexagonal surface 58. Inner bore 52 is thereby defined by surfaces 54, 55, 56, 57 and 58.

As shown in FIGS. 3 and 8-10, in this embodiment, shoulder surface 24 of retaining post 19 is sized to oppose all or a portion of annular shoulder 55 of coupler 50. Key portion 51 of coupler 50 extends radially outward beyond hex-receiving portion 68 and, when aligned about axis x-x with fastener body 16, radially outward between key-receiving portion 17 of fastener body 16. Key portion 51 comprises inner surface 54 that is substantially cylindrical in shape and is formed with a key-receiving pattern that is implemented as a set of circumferentially arranged lock pattern lobes 53 formed with a key pattern that matches the set of circumferentially arranged lock pattern grooves 23 of side wall 22 of key-receiving portion 17 of fastener body 16. As can be seen, lock pattern lobes 53 are visible on the annular left face 63 of key portion 51 of coupler 50. In order to impart lock pattern uniqueness, lock pattern grooves 23 and lock pattern lobes 53 may be patterned or configured in any suitable alternative manner, such as by employing a selected number of grooves and lobes, by interchanging the grooves and lobes between the two, and/or by varying other features thereof, such as the spacing between grooves and lobes and/or the width, length, depth, profile, or other configuration or feature thereof. Thus, grooves 23 of key-receiving portion 17 of fastener body 16 are configured so that corresponding lobes 53 of key portion 51 of coupler 50 may be used to engage lock pattern grooves 23. Key portion 51 of coupler 50 acts as a socket with an entrance formed with key pattern lobes 53 that are configured and arranged to engage the lock pattern grooves 23 when coupler 50 is placed over the right end of fastener body 16 and shroud 20. Thus, key portion 51 of coupler 50 has a set of key pattern lobes 53 matching grooves 23 of fastener body 16 that may be used to engage lock pattern grooves 23 to actuate fastener 16 about axis x-x.

As shown in FIGS. 3 and 8-11, inner tapper shoulder surface 57 of coupler 50 is sized and contoured oppose all or a portion of outer tapper shoulder surface 37 of shroud 20. Hex receiving portion 68 of coupler 50 fits radially outside of hex portion 38 of shroud 20 when aligned about axis x-x with fastener body 16 and shroud 20. Hex receiving portion 68 comprises inner surface 58 that is formed with a hexagonal cross-sectional profile that matches the hexagonal cross-sectional profile of first segment 41 of outer surface 38 of shroud 20. However, surface 58 and first segment 41 of surface 38 may be patterned or configured in any suitable alternative manner, such as by employing an alternative cross-sectional profile and/or by varying other features thereof. Thus, hex-receiving portion 58 of coupler 50 is configured so that surface 58 of hex portion 51 of coupler 50 may be used to rotationally engage corresponding hex surface 38 of first segment 41 of shroud 20. Hex portion 68 of coupler 50 acts as a socket with an entrance formed with inner hex surface 58 that is configured and arranged to engage first segment 41 of outer hex surface 38 of shroud 20 when coupler 50 is placed over the right end of fastener body 16 and shroud 20. Thus, hex portion 68 of coupler 50 has a socket matching hex portion 41 of shroud 20 that may be used to engage shroud 20 to actuate fastener 16 about axis x-x when shroud 20 is driven to rotate about axis x-x when key pattern lobes 53 of key portion 51 of coupler 50 are also in rotational engagement with matching grooves 23 of fastener body 16.

As shown in FIGS. 2, 3 and 11, shroud 20 has an axial length such that hex surface 38 of shroud 20 extends axially beyond end 59 of coupler 50 when coupler 50 is aligned about axis x-x with fastener body 16 and shroud 20 and shoulder surface 55 of coupler 50 abuts shoulder face 24 of fastener body 16 and key portion 51 of coupler 50 engages key-receiving portion 17 of fastener 16. Thus, second segment 42 of hex surface 38 of shroud 20 is exposed beyond coupler 20. Drive tool 91 may therefore be provided that includes drive portion and socket 92 configured and arranged to engage hex surface 38 of second segment 42 of shroud 20 when the socket is placed over the right end of shroud 20. Accordingly, to rotate shroud 20 about axis x-x, and thereby rotate fastener 16 about axis x-x via coupler 50, hex receiving portion or socket 92 of drive tool 91 is configured to rotationally engage corresponding hex surface 38 of second segment 42 of shroud 20. Thus, the drive tool has a socket matching hex segment 42 of shroud 20 that may be used to engage shroud 20 to actuate fastener 16 about axis x-x when shroud 20 is driven to rotate about axis x-x and both hex portion 68 of coupler 50 is in rotational engagement with hex segment 41 of shroud 20 and key pattern lobes 53 of key portion 51 of coupler 50 are also in rotational engagement with matching grooves 23 of fastener body 16. While a wrench is shown as the drive tool in this embodiment, other types of drive tools may be used as alternatives, including without limitation electric and pneumatic drive tools.

Coupler 50 is configured to fit within a gap space to engage the lock pattern and rotate nut fastener 16. Other tools either will not fit within the gap space or will not be able to properly engage and rotate nut fastener 16 when it is installed at its intended design installation torque. The size of the gap can be controlled by sizing the diameter of cylindrical sidewall 22 according to the diameter of the recess hole in which nut fastener 16 is employed. Key-receiving portion 17 and key portion 51 of coupler 50 are arranged so that sidewalls 22 and 62 fit within the wheel hole. In this position, the nut fastener's lock pattern is only exposed inside the recessed wheel hole entrance. In this position, access to the nut fastener's lock pattern is limited by the circumferential gap space between the lock pattern's outside diameter and the wheel hole's inside diameter. The ability of shroud 20 to spin relative to fastener body 16 and fastening portion 18 thereof provides a security feature that protects nut fastener 15 from being used as a purchase point for an unauthorized tool. Should an attempt be made to rotate nut fastener 16 by gripping the exposed end, cap 20 will tend to spin without any rotation being imparted to fastener body 16 and fastening portion 18 thereof.

As an alternative to a nut-type fastener body 16, a bolt-type fastener body may be used for example. Such a bolt-type fastener would generally include a fastener body and shroud that rotates about axis x-x relative to the fastener body. The fastener body would also include a key-receiving portion like key-receiving portion 17 and shroud-retaining post like shroud-retaining post 19, but instead of the threaded fastening portion of the fastener body comprising bore 21 that is internally threaded over a portion or all of its length, the threaded fastening portion of the fastener body comprises a threaded shank that is externally threaded over a portion or all of its length. The bolt fastener is mounted on wheels that have at least one fastener-receiving recess hole with threads corresponding to the threads of the shank. The remaining features are generally the same as described above in connection with FIGS. 1-11.

The components of the embodiments of the fastener may be formed of various different materials. For example, and without limitation, steel, stainless steel, brass, aluminum, and titanium may be used. As another alternative, and without limitation, non-metallic materials may be used in some applications. In some applications, and without limitation, the cap or shroud may be of a material harder than the fastener body.

The present invention contemplates that many changes and modifications may be made. Therefore, while forms of the improved fastener assembly have been shown and described, and a number of alternatives discussed, persons skilled in this art will readily appreciate that various additional changes and modifications may be made without departing from the scope of the invention, as defined and differentiated by the following claims.

## Claims

1. A fastener comprising:
a fastener body (16) orientated about a central axis;
said fastener body having a key-engaging portion (17) to which an external driving torque may be applied and a threaded fastening portion (18) configured and arranged to mate with a corresponding threaded element;
said fastener body having a shroud-receiving body portion (19) orientated about said central axis;
a shroud (20) concentrically mounted on said shroud-receiving body portion and having an inner surface (32) facing an outer surface (25) of said shroud-receiving body portion;
said shroud being supported in rotatable relationship with said shroud-receiving body portion such that said shroud will rotate relative to said fastener body under an applied external torque prior to said fastener body rotating when said fastener is engaged with an external structure at a design installation torque;
**characterized by**:
a torque coupler (50) operatively configured to rotationally engage said fastener body and said shroud;
said torque coupler comprising a key portion (51) operatively configured to rotationally engage said key-engaging portion of said fastener body;
said torque coupler comprising a shroud-engaging portion (68) operatively configured to rotationally engage a coupler-engaging portion (41) of said shroud; and
said shroud having a tool-engaging portion (42) to which an external driving torque may be applied;
wherein said coupler is operatively configured to be in rotatable relationship with both said key-engaging portion of said fastener body and said coupler-engaging portion of said shroud such that said fastener body will rotate about said central axis with rotation of said shroud about said central axis under an external driving torque applied about said central axis to said tool-engaging portion of said shroud at a design installation torque.

2. The fastener of claim 1, comprising a shroud-retaining element (46) restraining said shroud from translational movement in at least a first axial direction along said central axis relative to said fastener body.

3. The fastener of claim 2, wherein said inner surface of said shroud comprises an inwardly-facing annular groove (48), said outer surface of said shroud-receiving body portion comprising an outwardly-facing annular groove (49), and said shroud-retaining element comprises a retaining ring (46) disposed in said inwardly-facing annular groove and said outwardly-facing annular groove.

4. The fastener of claim 1, wherein said coupler-engaging portion of said shroud comprises a hexagonal outer surface (38).

5. The fastener of claim 4, wherein said shroud-engaging portion of said torque coupler comprises a hexagonal inner surface (58).

6. The fastener of claim 5, wherein said tool-engaging portion of said shroud comprises a hexagonal outer surface (38).

7. The fastener of claim 1, wherein said threaded fastening portion of said fastener body comprises an internally threaded nut portion or an externally threaded bolt portion.

8. The fastener of claim 1, wherein:
said shroud-receiving body portion of said fastener body comprises an annular body shoulder having an annular body shoulder surface (24);
said shroud comprises an annular shroud end surface (30); and
said annular body shoulder surface and said annular shroud end surface are in an opposing orientation and restrain said shroud from translational movement in an axial direction along said central axis relative to said fastener body.

9. The fastener of claim 8, wherein:
said torque coupler comprises an annular coupler shoulder having an annular coupler shoulder surface (55); and
said annular body shoulder surface and said annular coupler shoulder surface are in an opposing orientation and restrain said torque coupler from translational movement in said axial direction along said central axis relative to said fastener body.

10. The fastener of claim 1, wherein:
said shroud-receiving body portion of said fastener body comprises an annular body shoulder having an annular body shoulder surface (24);
said torque coupler comprises an annular coupler shoulder having an annular coupler shoulder surface (55); and
said annular body shoulder surface and said annular coupler shoulder surface are in an opposing orientation and restrain said torque coupler from translational movement in an axial direction along said central axis relative to said fastener body.

11. The fastener of claim 2, wherein:
said inner surface of said shroud comprises an inwardly-facing annular groove (48);
said outer surface of said shroud-receiving body portion comprising an outwardly-facing annular groove (49);
said shroud-retaining element comprises a retaining ring (46) disposed in said inwardly-facing annular groove and said outwardly-facing annular groove restraining said shroud from translational movement in said first axial direction along said central axis relative to said fastener body;
said shroud-receiving body portion of said fastener body comprises an annular body shoulder having an annular body shoulder surface (24);
said shroud comprises an annular shroud end surface (30);
said annular body shoulder surface and said annular shroud end surface are in an opposing orientation and restrain said shroud from translational movement in a second axial direction along said central axis relative to said fastener body;
said torque coupler comprises an annular coupler shoulder having an annular coupler shoulder surface (55); and
said annular body shoulder surface and said annular coupler shoulder surface are in an opposing orientation and restrain said torque coupler from translational movement in said second axial direction along said central axis relative to said fastener body.

## Patentansprüche

1. Befestigungselement, umfassend:
einen Befestigungselementkörper (16), der um eine Mittelachse ausgerichtet ist;
wobei der Befestigungselementkörper einen Schlüsseleingriffsabschnitt (17), auf den ein externes Antriebsdrehmoment aufgebracht werden kann, und einen Gewindebefestigungsabschnitt (18) aufweist, der konfiguriert und angeordnet ist, um mit einem entsprechenden Gewindeelement zusammenzupassen;
wobei der Befestigungselementkörper einen Ummantelungsaufnahme-Körperabschnitt (19) aufweist, der um die Mittelachse ausgerichtet ist;
eine Ummantelung (20), die konzentrisch auf dem Ummantelungsaufnahme-Körperabschnitt montiert ist und eine Innenfläche (32) aufweist, die einer Außenfläche (25) des Ummantelungsaufnahme-Körperabschnitts zugewandt ist;
wobei die Ummantelung in einer drehbaren Beziehung zu dem Ummantelungsaufnahme-Körperabschnitt gelagert ist, so dass sich die Ummantelung unter einem aufgebrachten externen Drehmoment relativ zu dem Befestigungselementkörper dreht, bevor sich der Befestigungselementkörper dreht, wenn das Befestigungselement mit einer externen Struktur bei einem Auslegungs-Installationsdrehmoment in Eingriff steht;
**gekennzeichnet durch**:
einen Drehmomentkoppler (50), der operativ konfiguriert ist, um mit dem Befestigungselementkörper und der Ummantelung drehend in Eingriff zu kommen;
wobei der Drehmomentkoppler einen Schlüsselabschnitt (51) umfasst, der operativ konfiguriert ist, um drehend mit dem Schlüsseleingriffsabschnitt des Befestigungselementkörpers in Eingriff zu kommen;
wobei der Drehmomentkoppler einen Ummantelungseingriffsabschnitt (68) umfasst, der operativ konfiguriert ist, um drehend mit einem Kopplereingriffsabschnitt (41) der Ummantelung in Eingriff zu kommen; und
wobei die Ummantelung einen Werkzeugeingriffsabschnitt (42) aufweist, auf den ein externes Antriebsdrehmoment aufgebracht werden kann;
wobei der Koppler operativ konfiguriert ist, um in einer drehbaren Beziehung sowohl mit dem Schlüsseleingriffsabschnitt des Befestigungselementkörpers als auch mit dem Kopplereingriffsabschnitt der Ummantelung zu stehen, so dass sich der Befestigungselementkörper unter einem externen Antriebsdrehmoment, das um die Mittelachse auf den Werkzeugeingriffsabschnitt der Ummantelung bei einem Auslegungs-Installationsdrehmoment aufgebracht wird, mit einer Drehung der Ummantelung um die Mittelachse um die Mittelachse dreht.

2. Befestigungselement nach Anspruch 1, umfassend ein Ummantelungs-Halteelement (46), das die Ummantelung an einer translatorischen Bewegung in mindestens einer ersten axialen Richtung entlang der Mittelachse relativ zu dem Befestigungselementkörper hindert.

3. Befestigungselement nach Anspruch 2, wobei die Innenfläche der Ummantelung eine nach innen weisende ringförmige Nut (48) umfasst, wobei die Außenfläche des Ummantelungsaufnahme-Körperabschnitts eine nach außen weisende ringförmige Nut (49) umfasst und das Ummantelungs-Halteelement einen Haltering (46) umfasst, der in der nach innen weisenden ringförmigen Nut und der nach außen weisenden ringförmigen Nut angeordnet ist.

4. Befestigungselement nach Anspruch 1, wobei der Kopplereingriffsabschnitt der Ummantelung eine sechseckige Außenfläche (38) umfasst.

5. Befestigungselement nach Anspruch 4, wobei der Ummantelungseingriffsabschnitt des Drehmomentkopplers eine sechseckige Innenfläche (58) umfasst.

6. Befestigungselement nach Anspruch 5, wobei der Werkzeugeingriffsabschnitt der Ummantelung eine sechseckige Außenfläche (38) umfasst.

7. Befestigungselement nach Anspruch 1, wobei der Gewindebefestigungsabschnitt des Befestigungselementkörpers einen Innengewinde-Mutterabschnitt oder einen Außengewinde-Bolzenabschnitt umfasst.

8. Befestigungselement nach Anspruch 1, wobei:
der Ummantelungsaufnahme-Körperabschnitt des Befestigungselementkörpers eine ringförmige Körperschulter mit einer ringförmigen Körperschulterfläche (24) umfasst;
die Ummantelung eine ringförmige Ummantelungsendfläche (30) umfasst; und
die ringförmige Körperschulterfläche und die ringförmige Ummantelungsendfläche in einer gegenüberliegenden Ausrichtung sind und die Ummantelung an einer translatorischen Bewegung in einer axialen Richtung entlang der Mittelachse relativ zu dem Befestigungselementkörper hindern.

9. Befestigungselement nach Anspruch 8, wobei:
der Drehmomentkoppler eine ringförmige Kopplerschulter mit einer ringförmigen Kopplerschulterfläche (55) umfasst; und
die ringförmige Körperschulterfläche und die ringförmige Kopplerschulterfläche in einer gegenüberliegenden Ausrichtung sind und den Drehmomentkoppler an einer translatorischen Bewegung in der axialen Richtung entlang der Mittelachse relativ zu dem Befestigungselementkörper hindern.

10. Befestigungselement nach Anspruch 1, wobei:
der Ummantelungsaufnahme-Körperabschnitt des Befestigungselementkörpers eine ringförmige Körperschulter mit einer ringförmigen Körperschulterfläche (24) umfasst;
der Drehmomentkoppler eine ringförmige Kopplerschulter mit einer ringförmigen Kopplerschulterfläche (55) umfasst; und
die ringförmige Körperschulterfläche und die ringförmige Kopplerschulterfläche in einer gegenüberliegenden Ausrichtung sind und den Drehmomentkoppler an einer translatorischen Bewegung in einer axialen Richtung entlang der Mittelachse relativ zu dem Befestigungselementkörper hindern.

11. Befestigungselement nach Anspruch 2, wobei:
die Innenfläche der Ummantelung eine nach innen weisende ringförmige Nut (48) umfasst;
die Außenfläche des Ummantelungsaufnahme-Körperabschnitts eine nach außen weisende ringförmige Nut (49) umfasst;
das Ummantelungs-Halteelement einen Haltering (46) umfasst, der in der nach innen weisenden ringförmigen Nut und der nach außen weisenden ringförmigen Nut angeordnet ist und die Ummantelung an einer translatorischen Bewegung in der ersten axialen Richtung entlang der Mittelachse relativ zu dem Befestigungselementkörper hindert;
der Ummantelungsaufnahme-Körperabschnitt des Befestigungselementkörpers eine ringförmige Körperschulter mit einer ringförmigen Körperschulterfläche (24) umfasst;
die Ummantelung eine ringförmige Ummantelungsendfläche (30) umfasst;
die ringförmige Körperschulterfläche und die ringförmige Ummantelungsendfläche in einer gegenüberliegenden Ausrichtung sind und die Ummantelung an einer translatorischen Bewegung in einer zweiten axialen Richtung entlang der Mittelachse relativ zu dem Befestigungselementkörper hindern;
der Drehmomentkoppler eine ringförmige Kopplerschulter mit einer ringförmigen Kopplerschulterfläche (55) umfasst; und
die ringförmige Körperschulterfläche und die ringförmige Kopplerschulterfläche in einer gegenüberliegenden Ausrichtung sind und den Drehmomentkoppler an einer translatorischen Bewegung in der zweiten axialen Richtung entlang der Mittelachse relativ zu dem Befestigungselementkörper hindern.

## Revendications

1. Élément de fixation comprenant :
un corps d'élément de fixation (16) orienté autour d'un axe central ;
ledit corps d'élément de fixation comportant une partie de mise en prise de clé (17) à laquelle peut être appliqué un couple d'entraînement externe et une partie de fixation filetée (18) configurée et agencée pour s'accoupler avec un élément fileté correspondant ;
ledit corps d'élément de fixation comportant une partie de corps de réception d'épaulement (19) orientée autour dudit axe central ;
un épaulement (20) monté concentriquement sur ladite partie de corps de réception d'épaulement et ayant une surface interne (32) faisant face à une surface externe (25) de ladite partie de corps de réception d'épaulement ;
ledit épaulement étant supporté en relation de rotation avec ladite partie de corps de réception d'épaulement, de sorte que ledit épaulement puisse tourner par rapport audit corps d'élément de fixation sous l'effet de l'application d'un couple externe avant la rotation dudit corps d'élément de fixation lorsque ledit élément de fixation est mis en prise avec une structure externe à un couple d'installation de conception ;
**caractérisé par** :
un coupleur de couple (50) configuré fonctionnellement pour venir en prise en rotation avec ledit corps d'élément de fixation et ledit épaulement ;
ledit coupleur de couple comprenant une partie clé (51) configurée fonctionnellement pour venir en prise en rotation avec ladite partie de mise en prise de clé dudit corps d'élément de fixation ;
ledit coupleur de couple comprenant une partie de mise en prise d'épaulement (68) configurée fonctionnellement pour venir en prise en rotation avec une partie de mise en prise de coupleur (41) dudit épaulement ; et
ledit épaulement comprenant une partie de mise en prise d'outil (42) à laquelle peut être appliqué un couple d'entraînement externe ;
dans lequel ledit coupleur est configuré fonctionnellement en relation de rotation avec à la fois ladite partie de mise en prise de clé dudit corps d'élément de fixation et ladite partie de mise en prise de coupleur dudit épaulement, de sorte que ledit corps d'élément de fixation puisse tourner autour dudit axe central avec la rotation dudit épaulement autour dudit axe central sous l'effet de l'application d'un couple d'entraînement externe autour dudit axe central à ladite partie de mise en prise d'outil dudit épaulement à un couple d'installation de conception.

2. Élément de fixation selon la revendication 1, comprenant un élément de retenue d'épaulement (46) empêchant ledit épaulement de se déplacer en translation dans au moins une première direction axiale le long dudit axe central par rapport audit corps d'élément de fixation.

3. Élément de fixation selon la revendication 2, dans lequel ladite surface interne dudit épaulement comprend une rainure annulaire orientée vers l'intérieur (48), ladite surface externe de ladite partie de corps de réception d'épaulement comprenant une rainure annulaire orientée vers l'extérieur (49), et ledit élément de retenue d'épaulement comprend un anneau de retenue (46) disposé dans ladite rainure annulaire orientée vers l'intérieur et ladite rainure annulaire orientée vers l'extérieur.

4. Élément de fixation selon la revendication 1, dans lequel ladite partie de mise en prise de coupleur dudit épaulement comprend une surface externe hexagonale (38).

5. Élément de fixation selon la revendication 4, dans lequel ladite partie de mise en prise d'épaulement dudit coupleur de couple comprend une surface interne hexagonale (58).

6. Élément de fixation selon la revendication 5, dans lequel ladite partie de mise en prise d'outil dudit épaulement comprend une surface externe hexagonale (38).

7. Élément de fixation selon la revendication 1, dans lequel ladite partie de fixation filetée dudit corps d'élément de fixation comprend une partie écrou à filetage interne ou une partie boulon à filetage externe.

8. Élément de fixation selon la revendication 1, dans lequel :
ladite partie de corps de réception d'épaulement dudit corps d'élément de fixation comprend une butée de corps annulaire ayant une surface de butée de corps annulaire (24) ;
ledit épaulement comprend une surface d'extrémité d'épaulement annulaire (30) ; et
ladite surface de butée de corps annulaire et ladite surface d'extrémité d'épaulement annulaire sont disposées dans une orientation opposée et empêchent ledit épaulement de se déplacer en translation dans une direction axiale le long dudit axe central par rapport audit corps d'élément de fixation.

9. Élément de fixation selon la revendication 8, dans lequel :
ledit coupleur de couple comprend une butée de coupleur annulaire présentant une surface de butée de coupleur annulaire (55) ; et
ladite surface de butée de corps annulaire et ladite surface de butée de coupleur annulaire sont disposées dans une orientation opposée et empêchent ledit coupleur de couple de se déplacer en translation dans ladite direction axiale le long dudit axe central par rapport audit corps d'élément de fixation.

10. Élément de fixation selon la revendication 1, dans lequel :
ladite partie de corps de réception d'épaulement dudit corps d'élément de fixation comprend une butée de corps annulaire ayant une surface de butée de corps annulaire (24) ;
ledit coupleur de couple comprend une butée de coupleur annulaire présentant une surface de butée de coupleur annulaire (55) ; et
ladite surface de butée de corps annulaire et ladite surface de butée de coupleur annulaire sont disposées dans une orientation opposée et empêchent ledit coupleur de couple de se déplacer en translation dans une direction axiale le long dudit axe central par rapport audit corps d'élément de fixation.

11. Élément de fixation selon la revendication 2, dans lequel :
ladite surface interne dudit épaulement comprend une rainure annulaire orientée vers l'intérieur (48) ;
ladite surface externe de ladite partie de corps de réception d'épaulement comprenant une rainure annulaire orientée vers l'extérieur (49) ;
ledit élément de retenue d'épaulement comprend un anneau de retenue (46) disposé dans ladite rainure annulaire orientée vers l'intérieur et ladite rainure annulaire orientée vers l'extérieur empêchant ledit épaulement de se déplacer en translation dans ladite première direction axiale le long dudit axe central par rapport audit corps d'élément de fixation ;
ladite partie de corps de réception d'épaulement dudit corps d'élément de fixation comprend une butée de corps annulaire ayant une surface de butée de corps annulaire (24) ;
ledit épaulement comprend une surface d'extrémité d'épaulement annulaire (30) ;
ladite surface de butée de corps annulaire et ladite surface d'extrémité d'épaulement annulaire sont disposées dans une orientation opposée et empêchent ledit épaulement de se déplacer en translation dans une seconde direction axiale le long dudit axe central par rapport audit corps d'élément de fixation ;
ledit coupleur de couple comprend une butée de coupleur annulaire présentant une surface de butée de coupleur annulaire (55) ; et
ladite surface de butée de corps annulaire et ladite surface de butée de coupleur annulaire sont disposées dans une orientation opposée et empêchent ledit coupleur de couple de se déplacer en translation dans ladite seconde direction axiale le long dudit axe central par rapport audit corps d'élément de fixation.
